# EUROPEAN PATENT APPLICATION

(11) **EP 4 557 490 A2**
(43) Date of publication of application: **21.05.2025**
(21) Application number: 24212935.1
(22) Date of filing: 14.11.2024
(51) Int. Cl.: H01M 50/489, H01M 10/052, H01M 50/121, H01M 50/414, H01M 50/417, H01M 50/42, H01M 50/443, H01M 50/446, H01M 50/451

(54) **SEPARATOR AND ELECTROCHEMICAL DEVICE INCLUDING THE SAME; METHOD OF DETERMINING STABILITY OF A BATTERY, AND BATTERY PACKAGE**

(30) Priority: 15.11.2023 KR 20230157974
(71) Applicant: SK Innovation Co., Ltd., Seoul 03188 (KR); SK ie technology Co., Ltd., Jongno-gu Seoul 03188 (KR)
(72) Inventor: KWON, Tae Wook, 34124 Daejeon (KR); CHANG, Kyeol, 34124 Daejeon (KR); CHO, Kyu Young, 34124 Daejeon (KR); LEE, Soon Bo, 34124 Daejeon (KR)
(74) Representative: Prüfer & Partner mbB Patentanwälte · Rechtsanwälte

(57) **Abstract**

Provided are a separator and an electrochemical device comprising the same. According to an aspect of the present disclosure, a separator comprising: a porous substrate; and an inorganic particle layer which is formed on at least one surface of the porous substrate and comprises a binder and inorganic particles, wherein the separator has a peak shown in a range of 1082.5 to 1086.5 cm⁻¹ in a spectrum by Fourier-transform infrared spectroscopy (FT-IR), and has a saturated moisture content measured by a Karl Fischer method of 350 to 1000 ppm, is provided.

## Description

### TECHNICAL FIELD

The following disclosure relates to a separator and an electrochemical device comprising the same. The disclosure also relates to a method of determining the stability of a battery over time, and/or of testing decrease of battery capacity or decomposition of electrolyte. The disclosure also relates to a battery package.

### BACKGROUND

Recently, as the demand for eco-friendly energy increases, research on electrochemical devices is in progress in various fields comprising electronic devices, such as mobile phones and PCs, and electric vehicles.

An insulating separator interposed between a positive electrode and a negative electrode is being studied in the direction of thinning for high capacity and high output characteristics of an electrochemical device, and when the separator is thinned, its mechanical strength and/or heat resistance is/are usually decreased. When mechanical strength and/or heat resistance is/are decreased, a safety problem during manufacturing process and use of a battery is more likely to occur. As an example, a short circuit between electrodes due to damage or deformation of the separator caused by a temperature rise in the battery may occur, increasing a risk of overheating or fire of the battery.

Therefore, development of a separator which is thin and has improved mechanical strength and heat resistance as described above is needed. In addition, development of a separator having high permeability for improving capacity and output is needed.

### [Related Art Documents]

### [Patent Document]

(Patent Document 1) Korean Patent Laid-Open Publication No. 2016-0109669 (September 21, 2016)

### SUMMARY

An embodiment of the present disclosure is directed to providing a separator having excellent heat resistance and adhesion, optionally even at a small thickness, and an electrochemical device comprising the separator.

Another embodiment of the present disclosure is directed to providing a separator having improved mechanical strength and permeability, optionally even at a small thickness, and an electrochemical device comprising the separator.

Still another embodiment of the present disclosure is directed to providing an electrochemical device having excellent resistance properties and thermal safety.

The separator of the present disclosure may be widely applied to a green technology field such as electric vehicles, battery charging stations, and other solar power generations and wind power generations using batteries. In addition, the separator of the present disclosure may be used in eco-friendly electric vehicles, hybrid vehicles, and other electric devices and systems for suppressing air pollution and greenhouse gas emissions to prevent or diminish climate change.

In one general aspect, a separator comprises: a porous substrate; and an inorganic particle layer which is formed on at least one surface of the porous substrate and comprises a binder and inorganic particles, wherein the separator has a peak shown in a range of 1082.5 to 1086.5 cm⁻¹ in a spectrum by Fourier-transform infrared spectroscopy (FT-IR), and has a saturated moisture content measured by a Karl Fischer method of 350 to 1000 ppm.

In an example embodiment, the saturated moisture content may be 450 to 1000 ppm.

In an example embodiment, the porous substrate may have an average thickness of 5 to 15 um, and/or a ratio of the average thickness of the porous substrate to an average thickness of the separator may be 0.7 or more.

In an example embodiment, a total thickness of the inorganic particle layer formed on the porous substrate may be 3.2 µm or less.

In an example embodiment, the binder may comprise a polyacrylamide-based resin.

In an example embodiment, the polyacrylamide-based resin may be a copolymer comprising a unit derived from a (meth)acrylamide-based monomer and a unit derived from a comonomer.

In an example embodiment, the polyacrylamide-based resin may comprise a structural unit derived from the (meth)acrylamide-based monomer and a structural unit derived from a (meth)acryl-based monomer containing a hydroxyl group.

In an example embodiment, the polyacrylamide-based resin may have a weight average molecular weight of 100,000 to 2,000,000 g/mol.

In an example embodiment, the binder may further comprise any one or two or more additional binders selected from the group consisting of polyvinyl alcohol, polyvinylidene fluoride, carboxymethyl cellulose, styrene butadiene rubber, polyacrylic acid, polyethylene glycol, polyacrylonitrile, polyvinylpyrrolidone, and copolymers thereof.

In an example embodiment, a content of the additional binder may be 0.1 to 30 wt% of the total content of the binder.

In an example embodiment, the inorganic particles may have a BET specific surface area of 3 to 7 m²/g.

In an example embodiment, the inorganic particles may have an average particle diameter (D50) of 0.5 to 1.5 um.

In an example embodiment, the inorganic particles may comprise any one or two or more selected from the group consisting of metal hydroxides, metal oxides, metal nitrides, and metal carbides.

In an example embodiment, heat shrinkage rates in the machine direction and/or the transverse direction which are measured after leaving the separator at 130°C for 60 minutes may be 5% or less.

In an example embodiment, the inorganic particle layer may have a weight ratio between the inorganic particles and the binder of 50:50 to 99.9:0.1.

In an example embodiment, the inorganic particle layer may be formed at 0.5 to 10 g/m².

In another general aspect, an electrochemical device comprises the separator described above.

In another general aspect, the present disclosure provides a method of determining stability of a battery over time, and/or of testing decrease of battery capacity or decomposition of electrolyte, by measuring whether the separator has a peak shown in a range of 1082.5 to 1086.5 cm⁻¹ in a spectrum by Fourier-transform infrared spectroscopy (FT-IR), and whether the separator has a saturated moisture content measured by a Karl Fischer method of 350 to 1000 ppm.

In another general aspect, the present disclosure provides a battery package comprising one or more battery cells, and a packaging material made of polyethylene, wherein each battery cell comprising a separator and the separator has a peak shown in a range of 1082.5 to 1086.5 cm⁻¹ in a spectrum by Fourier-transform infrared spectroscopy (FT-IR), and has a saturated moisture content measured by a Karl Fischer method of 350 to 1000 ppm. In a exemplary embodiment, the packaging material is entirely free of aluminum material.

Other features and aspects will be apparent from the following detailed description, the drawings, and the claims.

### BRIEF DESCRIPTION OF THE DRAWINGS

FIG. 1 is a FT-IR spectrum measured for the separator according to Example 1.
FIG. 2 is a FT-IR spectrum measured for the separator according to Comparative Example 2.
FIG. 3 is a FT-IR spectrum measured for the separator according to Comparative Example 3.
FIG. 4 is a FT-IR spectrum measured for the separator according to Comparative Example 4.
FIG. 5 is a drawing in which partial ranges of the FT-IR spectra measured for the separators of Example 1 and Comparative Examples 2 to 4 are expanded.

### DETAILED DESCRIPTION OF EMBODIMENTS

Hereinafter, the present disclosure will be described in detail. However, it is only illustrative and the present disclosure is not limited to the specific embodiments which are illustratively described in the present disclosure.

In addition, the singular form used in the specification and claims appended thereto may be intended to comprise a plural form also, unless otherwise indicated in the context.

In addition, the numerical range used in the present specification includes all values within the range including the lower limit and the upper limit, increments logically derived in a form and span of a defined range, all double limited values, and all possible combinations of the upper limit and the lower limit in the numerical range defined in different forms. Unless otherwise defined in the present specification, values which may be outside a numerical range due to experimental error or rounding off of a value are also included in the defined numerical range.

Furthermore, throughout the specification, unless explicitly described to the contrary, "comprising" any constituent elements will be understood to imply further comprising of other constituent elements rather than exclusion of other constituent elements.

In the present specification, it will be understood that when an element such as a layer, film, region, or substrate is referred to as being "on" or "above" another element, it can be directly on the other element or intervening elements may also be present.

In the present specification, "average particle diameter" refers to "D50", and "D50" refers to a particle diameter of an inorganic particle corresponding to 50% in terms of a volume-based integrated fraction. The average particle diameter may be derived from particle size distribution results obtained by collecting a sample of inorganic particles to be measured in accordance with the standard of ISO 13320-1 and performing analysis using S3500 available from MICROTRAC. In addition, "D90" refers to a particle diameter of a particle corresponding to 90% in the volume-based integrated fraction, and "D10" refers to a particle diameter of an inorganic particle corresponding to 10% in a volume-based integrated fraction. D90 and D10 may be derived in the same manner as D50.

The present disclosure provides a separator comprising: a porous substrate; and inorganic particle layer which is formed on at least one surface of the porous substrate and comprises a binder and inorganic particles, wherein the separator has a peak shown in a range of 1082.5 to 1086.5 cm⁻¹ (hereinafter, referred to as a first peak) in a spectrum by Fourier-transform infrared spectroscopy (FT-IR), and has a saturated moisture content measured by a Karl Fischer method of 350 to 1000 ppm.

According to an example embodiment, the separator having a peak shown in a range of 1082.5 to 1086.5 cm⁻¹ in a spectrum by Fourier-transform infrared spectroscopy (FT-IR) and also a saturated moisture content measured by a Karl Fischer method of 350 to 1000 ppm may have excellent heat resistance and adhesion and excellent permeability, optionally even at a small thickness.

In addition, an electrochemical device according to an example embodiment may have both excellent resistance properties and thermal safety by comprising the separator which satisfies both the first peak in the specific range shown in the FT-IR spectrum and the saturated moisture content in the specific range. Specifically, since the electrochemical device according to an example embodiment may show significantly low discharge resistance after 600 cycles, it may have improved charge and discharge performance.

Meanwhile, moisture content in a battery may increase after assembly and/or during storage depending on the features of the constituted material. When an increase rate of moisture content in the separator is high, moisture content in a battery can also increase after battery assembly, and the increase in moisture content as such may be a cause of decreasing a battery capacity by causing electrolyte decomposition. Accordingly, by determining whether the separator has a peak shown in a range of 1082.5 to 1086.5 cm⁻¹ (i.e. the "first peak") in a spectrum by Fourier-transform infrared spectroscopy (FT-IR), and has a saturated moisture content measured by a Karl Fischer method of 350 to 1000 ppm, useful indicators have been identified for determining the stability of a battery, in particular for determining the stability over time (such as up to 6 months or one, two, three, four or more years), and/or for testing whether battery capacity has decreased, and/or whether electrolyte is decomposed at an unsatisfactory level, optionally during the lifetime of the battery over such longer time periods.

Further, conventionally in order to keep the moisture content low in the battery, a high-priced packaging material such as aluminum should be used. However, the separator according to the present disclosure may maintain a low increase rate of moisture content during storage, by satisfying both the first peak in the specific range shown in the FT-IR spectrum and the saturated moisture content in the specific range. Accordingly, since the present disclosure has a low moisture content remaining in the battery, a battery having excellent performance may be provided even when a packaging material of polyethylene instead of an aluminum material. That is, the first peak being controlled in the specific range shown in the FT-IR spectrum, and the saturated moisture content being controlled in the specific range are both useful indicators that a battery with a polyethylene packaging material, optionally without any aluminum packaging material and preferably polyethylene alone, has and maintains excellent performance, optionally during the lifetime of the battery over time periods such as up to 6 months or one, two, three, four or more years. That is, according to the present disclosure, battery costs may be reduced while battery performance is improved.

As an example embodiment, although the separator has a very thin inorganic particle layer e.g. the average thickness of the porous substrate is 15 um or less and the thickness of the porous substrate is 0.7 times or more of the entire thickness of the separator, it may have excellent mechanical properties, electrical properties, and thermal properties described later. Manufacture of the separator having the above properties may be achieved by adjusting any one or more selected from the thickness of each layer, the size of inorganic particles, the type of binder, the type of binder which is additionally used, surface properties of the porous substrate, the size and/or the surface area of inorganic particles, and the saturated moisture content of the separator, but the means are not particularly limited as long as it is achieved.

As an example embodiment, the separator having the first peak in the specific range shown in the FT-IR spectrum and the saturated moisture content in the specific range may be manufactured using inorganic particles having a certain specific surface area. For example, the separator according to an example embodiment may have a BET specific surface area of the inorganic particles included of 3 m²/g or more, 4 m²/g or more and 7 m²/g or less, 6 m²/g or less, or a value between the numerical values, and specifically, 3 to 7 m²/g or 4 to 6 m²/g.

As an example embodiment, the separator as described above may be manufactured by adjusting a thickness ratio of the porous substrate and the seperator in a specific range. For example, the ratio of the average thickness of the porous substrate to the average thickness of the separator may be 0.7 or more, 0.75 or more, 0.77 or more and 0.99 or less, 0.9 or less, 0.85 or less, or a value between the numerical values, and specifically, 0.7 to 0.99, 0.75 to 0.9, or 0.77 to 0.85.

As an example embodiment, the separator as described above may be manufactured using the binder included in the separator as a specific resin. For example, the binder may include a polyacrylamide-based resin, and preferably a polyacrylamide-based resin including a structural unit derived from a (meth)acrylamide-based monomer and a structural unit derived from a (meth)acryl-based monomer containing a hydroxyl group.

According to an example embodiment, the separator as described above may be manufactured by using a specific additional binder with the polyacrylamide-based resin described above as a binder. For example, the specific additional binder may be any one or two or more selected from the group consisting of polyvinyl alcohol (PVA), polyvinylidene fluoride (PVDF), carboxymethyl cellulose (CMC), styrene-butadiene rubber (SBR), polyacrylic acid (PAA), polyethylene glycol (PEG), polyacrylonitrile (PAN), polyvinylpyrrolidone (PVP), and copolymers thereof.

According to another example embodiment, the separator as described above may be manufactured by using the polyacrylamide-based resin described above as the binder and using the porous substrate including a polar functional group on the surface. A non-limiting example of the polar functional group may include a carboxyl group, an aldehyde group, a hydroxyl group, and the like, but is not particularly limited. The polar functional group may be, according to an example, introduced by a hydrophilic surface treatment, and the hydrophilic surface treatment may be performed by including, according to an example, one or more of a corona discharge treatment and a plasma discharge treatment.

The separator which has the first peak in the specific range shown in the FT-IR spectrum and the saturated moisture content in the specific range as described above may be obtained by adjusting any one or a combination of two or more selected from the thickness and the thickness ratio of each layer, the size of the inorganic particles, the type of binder, the type of additionally used binder, the surface properties of the porous substrate, and the surface area of the inorganic particles of the separator. However, as long as the separator satisfies the first peak shown in the FT-IR spectrum and the saturated moisture content in the specific range, it is included in the range of the present disclosure, and the means are not particularly limited as long as they are satisfied.

Hereinafter, the separator will be described in more detail.

In an example embodiment, the first peak is a peak having the highest intensity in a range of 1082.5 to 1086.5 cm⁻¹, and specifically, may be a peak having the highest intensity in a range of 1083 to 1086.5 cm⁻¹ or in a range of 1083.5 to 1086 cm⁻¹.

In an example embodiment, the separator may further have a second peak shown in a range of 1140 to 1160 cm⁻¹ in the FT-IR spectrum. The second peak is a peak having the highest intensity in the range described above, and specifically, may be a peak having the highest intensity in a range of 1145 to 1155 cm⁻¹.

In an example embodiment, the separator may further have a third peak shown in a range of 2910 to 2930 cm⁻¹ in the FT-IR spectrum. In an example embodiment, the third peak is a peak having the highest intensity in the range described above, and specifically, may be a peak having the highest intensity in a range of 2915 to 2925 cm⁻¹ or in a range of 2915 to 2920 cm⁻¹.

In an example embodiment, the separator may further have a fourth peak shown in a range of 3090 to 3100 cm⁻¹ in the FT-IR spectrum. The fourth peak is a peak having the highest intensity in the range described above, and specifically, may be a peak having the highest intensity in a range of 3092 to 3098 cm⁻¹.

In an example embodiment, the separator may further have a fifth peak shown in a range of 3270 to 3295 cm⁻¹ in the FT-IR spectrum. In an example embodiment, the fifth peak is a peak having the highest intensity in the range described above, and specifically, may be a peak having the highest intensity in a range of 3275 to 3290 cm⁻¹ or in a range of 3275 to 3285 cm⁻¹.

In an example embodiment, the FT-IR spectrum of the separator may be measured using a FT-IR instrument equipped with a mercury cadmium telluride (MCT) detector, and specifically, may be measured in a transmission mode by scanning 5 to 200 times at a resolution of 4 cm⁻² in a range of 4000 to 675 cm⁻¹.

In an example embodiment, the separator may have a Gurley permeability of 250 sec/100 cc or less, 230 sec/100 cc or less, 200 sec/100 cc or less, 180 sec/100 cc or less, 10 sec/100 cc or more, 50 sec/100 cc or more, 90 sec/100 cc or more, 100 sec/100 cc or more, or a value between the numerical values. Specifically, the Gurley permeability may be 10 to 250 sec/100 cc, 50 to 200 sec/100 cc, 90 to 230 sec/100 cc, or 100 to 180 sec/100 cc. Since the gas Gurley permeability range described above is satisfied, ion conductivity may be excellent, and charge and discharge properties of the electrochemical device may be improved due to low internal resistance of the electrochemical device.

In an example embodiment, the separator may have a puncture strength of 0.3 N/µm or more, 0.32 N/um or more, 0.35 N/um or more and 1.0 N/um or less, 0.8 N/µm or less, 0.5 N/µm or less, or a value between the numerical values. Specifically, the puncture strength may be 0.3 to 1.0 N/µm, 0.32 to 0.8 N/pm, or 0.35 N/um to 0.5 N/um.

In an example embodiment, the separator may have a tensile strength in the machine direction (MD) of 1500 to 2500 kgf/cm² or 1500 to 2000 kgf/cm².

In an example embodiment, the separator may have a tensile strength in the transverse direction (TD) of 1500 kgf/cm² or more, 1600 kgf/cm² or more, 1700 kgf/cm² or more and 2500 kgf/cm² or less, 2000 kgf/cm² or less, or a value between the numerical values. Specifically, the tensile strength in the transverse direction may be 1500 to 2500 kgf/cm², 1600 to 2000 kgf/cm², or 1700 to 2000 kgf/cm².

Since the puncture strength and the tensile strength in the ranges described above are satisfied, resistance to external stress occurring during manufacture of an electrochemical device and a dendrite occurring during charge and discharge of an electrochemical device is excellent, and the safety of the electrochemical device may be secured.

In an example embodiment, the saturated moisture content is measured after leaving the separator in a thermo-hygrostat set to 40°C and a relative humidity of 90% for 24 hours, and may be 350 ppm or more, 450 ppm or more, 500 ppm or more, 550 ppm or more, 600 ppm or more and 1000 ppm or less, 900 ppm or less, 800 ppm or less, 750 ppm or less, 700 or less, 670 or less, or a value between the numerical values. Specifically, the saturated moisture content may be 350 to 1000 ppm, 450 to 1000 ppm, 500 to 900 ppm, 550 to 800 ppm, or 600 to 750 ppm.

In an example embodiment, the average thickness (t₁) of the porous substrate may be 5 to 15 um. Further, in an example embodiment a ratio (t₁/t₂) of the average thickness of the porous substrate to the average thickness (t₂) of the separator may be 0.7 or more. The separator according to an example embodiment may implement the Gurley permeability, the puncture strength, the tensile strength, and the saturated moisture content in the ranges described above even under the thickness conditions described above simultaneously. Accordingly, a separator for a secondary battery may be thinned, and is appropriate for being applied to a high capacity/high output battery.

In an example embodiment, the average thickness of the porous substrate is not necessarily limited thereto, but may be 5 um or more, 8 um or more and 15 µm or less, 12 µm or less, or a value between the numerical values. Specifically, the average thickness of the porous substrate may be 5 to 15 um or 8 to 12 um.

In an example embodiment, a ratio of the average thickness of the porous substrate to an average thickness of the separator may be 0.7 or more, 0.75 or more, 0.77 or more and 0.99 or less, 0.9 or less, 0.85 or less, or a value between the numerical values. Specifically, a ratio of the average thickness of the porous substrate to the average thickness of the separator may be 0.7 to 0.99, 0.75 to 0.9, or 0.77 to 0.85.

In an example embodiment, the average thickness of the separator is not necessarily limited thereto, but may be 7 um or more, 10 um or more, 12 um or more and 20 µm or less, 15 um or less, or a value between the numerical values. Specifically, the average thickness of the separator may be 7 to 20 µm, 10 to 15 um, or 12 to 15 um.

In an example embodiment, the inorganic particle layer may be coated on one or both surfaces of the porous substrate, and when both surfaces of the porous substrate are coated with the inorganic particle layer, the thicknesses of the inorganic particle layers coated on one surface and the other surface may be the same as or different from each other.

In an example embodiment, the total thickness of the inorganic particle layer formed on the porous substrate is not necessarily limited thereto, but may be 4 µm or less, 3.5 um or less and 1 um or more, 1.5 um or more, or a value between the numerical values. Preferably, the total thickness of the inorganic particle layer may be 3.2 µm or less. Specifically, the total thickness of the inorganic particle layer may be 1 to 4 µm, 1.5 to 3.5 µm, 1 to 3.2 um, or 1.5 to 3.2 um.

In an example embodiment, the binder may include a polyacrylamide-based resin.

In an example embodiment, the polyacrylamide-based resin may be polyacrylamide or a copolymer including the same. In an example embodiment, the copolymer may be a block copolymer or a random copolymer, but the copolymer described in an example embodiment refers to a random copolymer which is polymerized by mixing two or more monomers together.

In an example embodiment, the polyacrylamide-based resin may be a copolymer including a unit derived from a (meth)acrylamide-based monomer and a unit derived from a comonomer. Preferably, the polyacrylamide-based resin may include a structural unit derived from the (meth)acrylamide-based monomer and a structural unit derived from a (meth)acryl-based monomer containing a hydroxyl group.

Since the separator according to an example embodiment comprises the above copolymer rather than a homopolymer derived from an acrylamide-based monomer, mechanical strength, gas permeability, heat resistance, and adhesion may be further improved. In addition, since the electrochemical device includes the separator, it may have better resistance properties and heat stability.

The unit derived from the (meth)acrylamide-based monomer of the polyacrylamide-based resin may be represented by the following Chemical Formula 1: 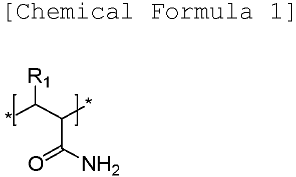 wherein R₁ is hydrogen or a C1 to C6 alkyl group.

The unit derived from the hydroxyl group-containing (meth)acryl-based monomer of the polyacrylamide-based resin may be represented by the following Chemical Formula 2: 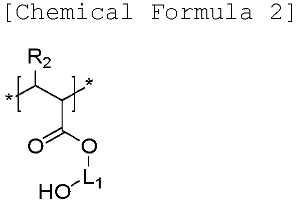 wherein R₂ is hydrogen or a C1 to C6 alkyl group. In addition, L₁ is a linear or branched C1 to C6 alkylene group, preferably C1 to C3 alkylene group, or more preferably C2 ethylene group.

In the polyacrylamide-based resin according to an example embodiment the (meth)acrylamide-based monomer may be included at 65 to 98 mol%, 70 to 97 mol%, or 75 to 95 mol%. The (meth)acryl-based monomer containing a hydroxyl group may be included at 2 to 35 mol%, 3 to 30 mol%, or 5 to 25 mol%. When the polyacrylamide-based resin is prepared within the content range, sufficient adhesive strength may be obtained, and a more significant effect may be obtained at a shrinkage rate at a high temperature.

In an example embodiment, the polyacrylamide-based resin may have a weight average molecular weight in terms of polyethylene glycol of 100,000 g/mol or more, 200,000 g/mol or more and 2,000,000 g/mol or less, 1,000,000 g/mol or less, 500,000 g/mol or less, or a value between the numerical values as measured using gel permeation chromatography. Specifically, the polyacrylamide-based resin may have a weight average molecular weight of 100,000 to 2,000,000 g/mol, 200,000 to 1,000,000 g/mol, or 200,000 to 500,000 g/mol. According to an example embodiment, when the weight average molecular weight of the polyacrylamide-based resin satisfies the above range, heat resistance and adhesion may be further improved.

In an example embodiment, the binder may further comprise any one or two or more additional binders selected from the group consisting of polyvinyl alcohol (PVA), polyvinylidene fluoride (PVDF), carboxymethyl cellulose (CMC), styrene-butadiene rubber (SBR), polyacrylic acid (PAA), polyethylene glycol (PEG), polyacrylonitrile (PAN), polyvinylpyrrolidone (PVP), copolymers thereof.

Since the separator according to an example embodiment uses the additional binder described above with the polyacrylamide-based resin as a binder, mechanical strength, gas permeability, heat resistance, and adhesion may be further improved. In addition, since improvement of the physical properties as described above may be achieved without pretreatment such as corona discharge treatment on the porous substrate, time and material costs in terms of process may be reduced.

In an example embodiment, a content of the additional binder may be 0.1 wt% or more, 1 wt% or more, 5 wt% or more and 30 wt% or less, 20 wt% or less, or 15 wt% or less of the total content of the binder. Otherwise, the content may be a value between the numerical values. Specifically, the content of the additional binder may be 0.1 to 30 wt%, 1 to 20 wt%, or 5 to 15 wt%, but is not necessarily limited thereto.

In an example embodiment, the additional binder may be polyvinyl alcohol, which may further improve the adhesion of the separator without pretreatment such as corona discharge treatment on the porous substrate.

In an example embodiment, a degree of saponification when the additional binder is polyvinyl alcohol may be 80 to 95 mol%, specifically 85 to 90 mol%, but is not particularly limited thereto.

In an example embodiment, the additional binder may have a weight average molecular weight of 10,000 to 100,000 g/mol, specifically 30,000 to 70,000 g/mol, but is not particularly limited thereto.

The separator according to an example embodiment may have excellent heat resistance despite a low thickness. In an example embodiment, heat shrinkage rates in the machine direction and/or in the transverse direction which are measured after leaving the separator at 130°C for 60 minutes may be 5% or less, preferably 4% or less, more preferably 3% or less, 2% or less, 1.5% or less, or 1.2 % or less, 1.1 % or less in each direction.

In an example embodiment, the porous substrate may be a polyolefin-based porous substrate such as polyethylene, polypropylene, or copolymers thereof, but is not thereto, and all porous substrates known as a porous substrate of a separator of an electrochemical device may be used. In an example embodiment, the porous substrate may be manufactured into a film or sheet, but is not particularly limited.

In an example embodiment, the porous substrate may have a porosity of 20 to 60%, specifically 30 to 60%, but is not limited thereto.

In an example embodiment, the inorganic particle layer may include a binder and inorganic particles, and may be a porous inorganic particle layer in which the inorganic particles are connected and fixed by the binder to form pores. In an example embodiment, the inorganic particle layer is provided on at least one surface of the porous substrate, may occupy an area fraction of 60% or more, 70% or more, 80% or more, or 90% or more, based on an overall surface of the porous substrate, and preferably, may be formed on the area of the porous substrate of 100%.

As an example embodiment, the inorganic particles are not limited as long as they are inorganic particles used in the art. As a non-limiting example, the inorganic particle particles may include any one or two or more selected from the group consisting of metal hydroxides, metal oxides, metal nitrides, and metal carbides. For example, the inorganic particles may include any one or two or more selected from the group consisting of magnesium oxide (MgO) , magnesium hydroxide (Mg(OH)₂), alumina (Al₂O₃), boehmite (γ-AlO(OH)), aluminum hydroxide (Al(OH)₃), silica (SiO₂), silicon carbide (SiC), calcium oxide (CaO), titanium dioxide (TiO₂), strontium titanate (SrTiO₃), zinc oxide (ZnO), yttrium oxide (Y₂O₃), zirconium oxide (ZrO₂), tin oxide (SnO₂), and cerium oxide (CeO₂). In terms of stability of a battery, the inorganic particles may be preferably any one or two or more metal hydroxide particles selected from the group consisting of boehmite, aluminum hydroxide (Al(OH)₃), and magnesium hydroxide (Mg(OH)₂).

In an example embodiment, the shape of the inorganic particles is not limited, and may be spherical, oval, needle-shaped, and the like.

In an example embodiment, the inorganic particles may have a BET specific surface area of 3 m²/g or more, 4 m²/g or more and 7 m²/g or less, 6 m²/g or less, or a value between the numerical values. Specifically, the inorganic particles may have the BET specific surface area of 3 to 7 m²/g or 4 to 6 m²/g. The present disclosure may provide a separator satisfying the physical properties to be implemented in the present disclosure simultaneously, when the specific surface area in the above described range is satisfied. Herein, the BET specific surface area of the inorganic particles may be measured by the method of ASTM C1069.

In an example embodiment, the inorganic particles may have an average particle diameter (D50) of 0.5 um or more, 0.6 um or more and 1.5 µm or less, 1.0 um or less, or a value between the numerical values. Specifically, the inorganic particles may have the D50 of 0.5 to 1.5 µm or 0.6 to 1.0 um, but it may be changed as long as it is not out of the range of the present disclosure.

In an example embodiment, the inorganic particle layer may have a weight ratio between the inorganic particles and the binder of 50:50 to 99.9:0.1, 60:40 to 98:2, or 80:20 to 98:2, but is not particularly limited thereto.

In an example embodiment, the inorganic particle layer may be formed at 0.5 to 10 g/m², specifically 1 to 5 g/m², and more specifically 2.5 to 4 g/m², but is not particularly limited thereto.

Hereinafter, a method for manufacturing a separator of the present disclosure will be described.

The method for manufacturing the separator satisfying the physical properties described above simultaneously may include: a first step of preparing a coating slurry including a binder and inorganic particles; and a second step of applying the coating slurry on at least one surface of a porous substrate to form an inorganic particle layer.

Since the description of each of the porous substrate, the inorganic particle layer, the inorganic particles, and the binder is as described above, detailed description will be omitted.

Any common method known in the art may be applied without limitation to the method for preparing a coating slurry in the first step, and though it is not particularly limited, according to a non-limiting example, the inorganic particles may be dispersed by stirring to prepare a slurry, and agglomerated inorganic particles may be dispersed using a ball mill.

The coating slurry includes inorganic particles, a binder, and a solvent, and the solvent may be water, lower alcohols such as ethanol, methanol, and propanol, solvents such as dimethylformamide, acetone, tetrahydrofuran, diethyl ether, methylene chloride, DMF, N-ethyl-2-pyrrolidone, hexane, and cyclohexane, or a mixture thereof, but is not necessarily limited thereto.

In an example embodiment, a solid content of the coating slurry is not particularly limited, but for example, may be 1 to 50 wt%, 5 to 30 wt%, or 10 to 30 wt%, but is not limited thereto.

In an example embodiment, the coating slurry may include 50 to 99.9 wt% of the inorganic particles and 0.1 to 50 wt% of the binder, and specifically, 60 to 98 wt% of the inorganic particles and 2 to 40 wt% of the binder, and more specifically, 80 to 98 wt% of the inorganic particles and 2 to 20 wt% of the binder, based on the total weight of the solid content, but is not limited thereto.

Any common method known in the art may be applied to the method for applying the coating slurry in the second step without limitation, and according to a non-limiting example, roll coating, spin coating, dip coating, bar coating, die coating, slit coating, inkjet printing, and a combination of these methods may be applied. The applied slurry may be dried and formed into an inorganic particle layer. Drying for forming the inorganic particle layer is not particularly limited, but may be performed at 100°C or lower or 30 to 60°C.

In a specific example embodiment, after performing drying for forming the inorganic particle layer, a process of aging the porous substrate having the inorganic particle layer formed thereon may not be further included. The aging may be performed at 50 to 150°C or 60 to 120°C, and an aging time may be 2 hours to 24 hours or 10 to 20 hours. More specifically, the aging may be performed in a temperature range of 70 to 120°C for 10 to 15 hours. According to an example embodiment, since a separator satisfying the physical properties as described above simultaneously may be manufactured without performing the aging process, time and material costs in terms of process may be reduced.

The present disclosure may provide an electrochemical device including the separator according to an example embodiment of the example embodiments described above. Since the electrochemical device includes the separator as described above, electrical resistance is reduced, and thus, the electrochemical device may have significantly excellent life characteristics and excellent thermal stability at a high temperature.

The electrochemical device may be all known energy storage devices, and though it is not particularly limited, as a non-limiting example, may be a lithium secondary battery. Since the lithium secondary battery is well known and its configuration is also known, it will be not described in detail in the present disclosure.

The lithium secondary battery according to an example embodiment may include the separator described above between a positive electrode and a negative electrode. Herein, the positive electrode and the negative electrode may be used without limitation as long as they are commonly used in the lithium secondary battery.

When the separator according to an example embodiment is commonly used in a battery, the manufacturing method follows a common manufacturing method in which a negative electrode, a separator, and a positive electrode are arranged and assembled, and an electrolyte solution is injected thereto to complete the manufacture, and thus, the manufacturing method will not be described any more in detail.

Regarding the aspect of the method of determining the stability of a battery over time, and/or of testing decrease of battery capacity or decomposition of electrolyte, and regarding the aspect of the battery package with a polyethylene packaging material, reference can be made to the further description above concerning the disclosure of the separator as well as the description about the battery and its components other than the separator.

Hereinafter, the examples of the present disclosure will be further described with reference to the specific experimental examples. It is apparent to those skilled in the art that the examples and the comparative examples included in the experimental examples only illustrate the present disclosure and do not limit the appended claims, and various modifications and alterations of the examples may be made within the range of the scope of the present disclosure, and these modifications and alterations will fall within the appended claims.

First, methods for measuring physical properties of a separator and a method for evaluating characteristics of a secondary battery will be described.

### [FT-IR spectrum measurement]

A separator was cut into a size of 1 cm×1 cm to prepare a measurement sample, and measurement was performed using a FT-IR instrument (available from Thermo Scientific, Nicolet iN10 Infrared Microscope) equipped with a mercury cadmium telluride (MCT) detector under the following conditions:
- resolution : 4 cm⁻¹
- scans : 16
- range: 4000-675 cm⁻¹
- measurement point per sample: 15 points (10 um interval) * 15 points (10 um interval) mapping 3 position

### [Average thickness (µm) of separator and porous substrate]

The separators were overlapped in 10 layers, each thickness at 5 random points was measured in the transverse direction by a thickness measurement device available from Mitutoyo, all 5 measured values are added, the added value was divided by 5 to derive an average thickness of the 10 layered separator, and the obtained value was divided by 10 again to derive an overall average thickness of a single separator.

The average thickness of the porous substrate was determined by overlapping only the porous substrates in 10 layers, measuring each thickness at 5 random points in the transverse direction by a thickness measurement device available from Mitutoyo and adding them, dividing the obtained value by 5 to derive an average thickness of the 10 layer separator, and dividing the value by 10 again to derive an average thickness of the porous substrate. After the inorganic particle layer was formed, the inorganic particle layer was detached from the separator, the substrate was sufficiently dried, and the average thickness of the porous substrate from which the inorganic particle layer was detached was derived as described above.

### [Gurley permeability (sec/100 cc)]

It was measured according to the standard of ASTM D726, using Densometer available from Toyoseiki. A time it took for 100 cc of air to pass a separator having an area of 1 in² was recorded in seconds and compared.

### [Puncture strength (N/um)]

The puncture strength was measured by attaching a pin tip having a diameter of 1.0 mm and a radius of curvature of 0.5 mm to Universal Test Machine (UTM) 3345 available from INSTRON and pressing the separator at a speed of 120 mm/min. At this time, a load (N) when the separator was broken was divided by the thickness (µm) of the separator to calculate the puncture strength.

### [Tensile strength (kgf/cm²)]

The tensile strength was measured at room temperature(25°C) as a strength when a separator was broken by pulling the separator in the transverse direction and in the machine direction, respectively, at a speed of 100 mm/min using a Universal Test Machine (UTM) 3345 available from INSTRON in accordance with ASTM D882.

### [Heat shrinkage rate (%)]

A separator was cut into a square shape with a side of 10 cm and a transverse direction (TD) and a machine direction (MD) were indicated. A sample was placed in the center, 5 sheets of paper were placed on and under the sample, respectively, and the four sides of the paper were wrapped with tape. The sample wrapped in paper was allowed to stand in a hot air drying oven at 130 °C for 60 minutes. Thereafter, the sample was taken out, the separator was measured with a camera, and shrinkage rates in the machine direction (MD) and in the transverse direction (TD) were calculated using the following equations: MD Heat shrinkage rate (%) = [(length in MD before heating - length in MD after heating)/length in MD before heating] × 100 TD Heat shrinkage rate (%) = [(length in TD before heating - length in TD after heating)/length in TD before heating] × 100

### [Saturated moisture content (ppm)]

In order to measure the saturated moisture content of the separator, a Karl Fischer method was used. A Karl Fischer titrator available from Metrohm was used as measuring equipment, and measuring conditions were a separator sample weight of 0.3 g, an oven temperature of 150°C, and a measurement time of 600 seconds.

Specifically, the manufactured separator was left for 24 hours in a thermo-hygrostat set to 40°C and a relative humidity of 90%, and then the saturated moisture content was measured under the conditions described above.

### [Adhesive strength]

A separator was cut into a size of 50 mm wide×50 mm long and placed so that the inorganic particle layer was on top. A piece of black drawing paper (20 mm wide× 150 mm long× 0.25 mm thick) having a coefficient of dynamic fraction of 0.15 was placed thereon, a pressing device was used to apply a certain pressure (200 g/cm²), the black drawing paper was forcibly pulled to the side, and a degree of inorganic substance adhered on the surface was confirmed and determined as A/B/C/D/E/F depending on the adhesion degree, referring to the following grades:
A: no adhesion
B: inorganic substance adhered in a small amount

In C-F, the binder and the inorganic substance were adhered together and the degree of adhesion was more and more severe from C toward F.

### [Resistance properties of battery]

Each battery manufactured according to the examples and the comparative examples was charged at a constant current-constant voltage (CC-CV) of 4.2 V using a charge/discharge cycle device, and then was discharged. Specifically, each battery was charged at constant current with a 0.5 C rate at 25°C until the voltage reached 4.2 V, and charged at constant voltage until the current was 0.01 C while maintaining 4.2 V. Subsequently, a cycle of discharging at a constant current of 0.5 C until the voltage reached 3.0 V during discharging was repeated 600 times. When a state of charge (SoC) at the 600th charge/discharge cycle was 60%, direct current internal resistance (DC-IR) was measured during discharging by a J-pulse method to derive a resistance value.

When an increase in resistance of each battery manufactured according to the examples and the comparative examples was less than 5% based on the resistance value of Example 1, it was marked as "low", when the increase was 5% or more, it was marked as "middle", and when the increase was 10% or more, it was marked as "high".

### <Example 1>

### (Preparation of coating slurry)

96.5 wt% of boehmite (D10: 0.45 um, D50: 0.71 µm, D90: 1.57 um, BET specific surface area: 5 m²/g) as inorganic particles, and 3.0 wt% of a polyacrylamide-based resin (Mw=300,000g/mol, acrylamide: 2-hydroxyethyl methacrylate = 90 mol%: 10 mol%) and 0.5 wt% of polyvinyl alcohol (degree of saponification: 88 mol%, Mw: 50,000 g/mol) as a binder, based on the total weight of the solid, were added to water, and then stirring was performed to prepare a coating slurry having a solid content concentration of 28 wt%.

### Manufacture of separator

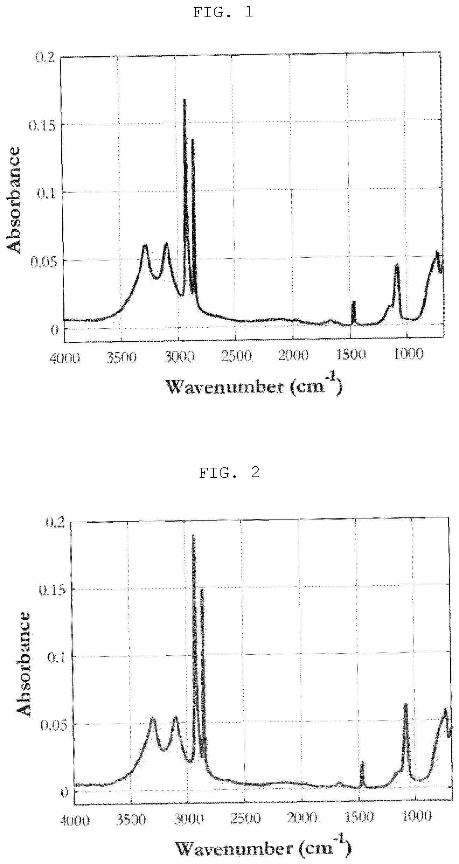

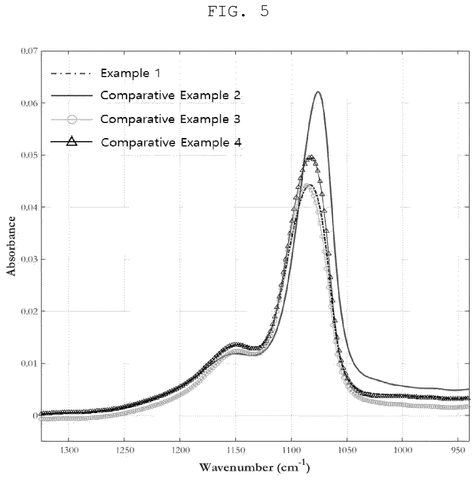

A polyethylene porous film (porosity: 42%, Gurley permeability: 128 sec/100 cc, tensile strength in MD: 2,317 kgf/cm², tensile strength in TD: 2,514 kgf/cm²) having an average thickness of 10 um was used as a porous substrate. The coating slurry prepared above was applied by coating on both surfaces of the porous substrate and then dried, thereby manufacturing a separator having an inorganic particle layer having an average thickness of 1.35 um formed on both surfaces, respectively, of the porous substrate. The physical properties of the separator are listed in the following Table 1, and the FT-IR spectrum measurement results of the separator are shown in Table 3, FIG. 1, and FIG. 5.

### Manufacture of secondary battery:

94 wt% of LiCoO₂ as a positive electrode active material, 2.5 wt% of polyvinylidene fluoride as a fusing agent, and 3.5 wt% of carbon black as a conductive agent were added to N-methyl-2-pyrrolidone (NMP) as a solvent, and stirring was performed to prepare a uniform positive electrode slurry. The slurry prepared above was coated on an aluminum foil having a thickness of 30 µm, dried, and pressed to manufacture a positive electrode having a total thickness of 150 µm. 95 wt% of artificial graphite as a negative electrode active material, 3 wt% of acryl-based latex having Tg of -52°C as a fusing agent, and 2 wt% of carboxymethyl cellulose (CMC) as a thickener were added to water as a solvent, and stirring was performed to prepare a uniform negative electrode slurry. The slurry prepared above was coated on a copper foil having a thickness of 20 µm, dried, and pressed to manufacture a negative electrode having a total thickness of 150 um. A pouch type battery was assembled by stacking the separator manufactured above between the positive electrode and the negative electrode, and in order to fuse the positive electrode, the negative electrode, and the separator together, the assembled battery was heat-fused at 80°C, 1 MPa with a heat press machine. Thereafter, an electrolyte in which 1 M lithium hexafluorophosphate (LiPF₆) was dissolved in a solution including ethylene carbonate (EC), ethyl methyl carbonate (EMC), and dimethyl carbonate (DMC) at a volume ratio of 30:50:20 was injected, and the battery was sealed to manufacture a secondary battery having a capacity of 2 Ah. The resistance properties of the secondary battery are listed in the following Table 1.

### <Example 2>

The process was performed in the same manner as in Example 1, except that 3.5 wt% of a polyacrylamide resin was used instead of using polyvinyl alcohol as the binder and the porous substrate which was pretreated by the following method was used. The pretreated porous substrate was manufactured by treating the both surfaces of a polyethylene porous film (porosity: 42%, Gurley permeability: 128 sec/100 cc, tensile strength in MD: 2,317 kgf/cm², tensile strength in TD: 2,514 kgf/cm²) having an average thickness of 10 µm with corona discharge. At this time, the corona discharge treatment was performed at a power density of 2 W/mm and a rate of 3 to 20 mpm (meter per minute).

The characteristics of the manufactured separator and secondary battery are listed in the following Tables 1 and 3.

### <Example 3>

A separator and a secondary battery were manufactured in the same manner as in Example 1, except that when the coating slurry was prepared, boehmite (D10: 0.56 um, D50: 0.85 µm, D90: 1.93 µm, BET specific surface area: 4 m²/g) was used as the inorganic particles. The characteristics of the separator and the secondary battery are listed in the following Tables 1 and 3.

### <Example 4>

A separator and a secondary battery were manufactured in the same manner as in Example 1, except that when the coating slurry was prepared, boehmite (D10: 0.38 µm, D50: 0.67 µm, D90: 1.52 um, BET specific surface area: 6 m²/g) was used as the inorganic particles. The characteristics of the separator and the secondary battery are listed in the following Tables 1 and 3.

### <Example 5>

A separator and a secondary battery were manufactured in the same manner as in Example 1, except that polyacrylamide having a weight average molecular weight of 200,000 g/mol was used instead of the polyacrylamide-based resin of Example 1. The characteristics of the separator and the secondary battery are listed in the following Tables 1 and 3.

### <Comparative Example 1>

A separator and a secondary battery were manufactured in the same manner as in Example 2, except that when the separator was manufactured, the inorganic particle layer was formed at an average thickness of 2 µm on both surfaces of a polyethylene porous film (porosity: 40%, Gurley permeability: 152 sec/100 cc, tensile strength in MD: 2,242 kgf/cm², tensile strength in TD: 1,864 kgf/cm²) having an average thickness of 9 µm, respectively. The characteristics of the separator and the secondary battery are listed in the following Tables 2 and 3.

### <Comparative Example 2>

A separator and a secondary battery were manufactured in the same manner as in Example 2, except that when the coating slurry was prepared, boehmite (D10: 0.16 µm, D50: 0.31 µm, D90: 0.75 um, BET specific surface area: 20 m²/g) was used as the inorganic particles. The characteristics of the separator and the secondary battery are shown in Tables 2 and 3 and FIG. 5.

### <Comparative Example 3>

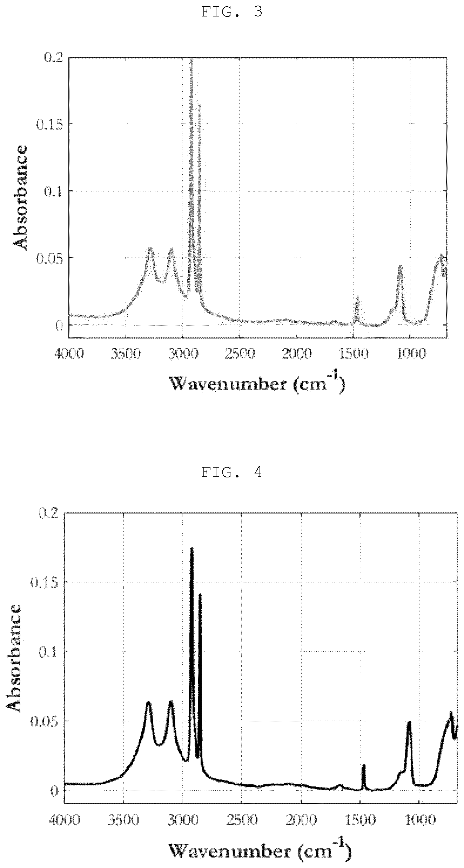

A separator and a secondary battery were manufactured in the same manner as in Example 2, except that when the coating slurry was prepared, boehmite (D10: 0.79 µm, D50: 1.64 µm, D90: 2.85 µm, BET specific surface area: 2.5 m²/g) was used as the inorganic particles. The characteristics of the separator and the secondary battery are shown in Tables 2 and 3, and FIGS. 3 and 5.

### <Comparative Example 4>

A separator and a secondary battery were manufactured in the same manner as in Example 2, except that when the coating slurry was prepared, boehmite (D10: 0.31 µm, D50: 0.58 µm, D90: 1.28 um, BET specific surface area: 8 m²/g) was used as the inorganic particles. The characteristics of the separator and the secondary battery are shown in Tables 2 and 3, and FIGS. 4 and 5.

**[Table 1]**

| | Unit | Example 1 | Example 2 | Example 3 | Example 4 | Example 5 |
|---|---|---|---|---|---|---|
| Average thickness (t₁) of porous substrate | µm | 10 | 10 | 10 | 10 | 10 |
| Average thickness (t₂) of separator | µm | 12.7 | 12.6 | 12.6 | 12.7 | 12.7 |
| t₁/t₂ | - | 0.79 | 0.79 | 0.79 | 0.79 | 0.79 |
| Coating amount | g/m² | 3.2 | 3.2 | 3.2 | 3.3 | 3.2 |
| Gurley permeability | sec/100 cc | 163 | 175 | 160 | 162 | 172 |
| Puncture strength | N/µm | 0.373 | 0.335 | 0.368 | 0.332 | 0.334 |
| Tensile strength in MD | kgf/cm² | 1753 | 1620 | 1745 | 1739 | 1630 |
| Tensile strength in TD | kgf/cm² | 1927 | 1725 | 1911 | 1920 | 1750 |
| Saturated moisture content | ppm | 630 | 672 | 600 | 670 | 650 |
| Heat shrinkage rate in MD | % | 1.3 | 3.6 | 1.4 | 1.4 | 4.8 |
| Heat shrinkage rate in TD | % | 1.1 | 2.9 | 1.2 | 1.1 | 4.5 |
| Adhesive strength | - | A | A | A | A | A |
| Resistance properties of secondary battery | - | Standard | Low | Low | Low | Low |

**[Table 2]**

| | Unit | Comparative Example 1 | Comparative Example 2 | Comparative Example 3 | Comparative Example 4 |
|---|---|---|---|---|---|
| Average thickness (t₁) of porous substrate | *µ*m | 8.9 | 10.3 | 10.1 | 10.3 |
| Average thickness (t₂) of separator | *µ*m | 12.9 | 12.9 | 13.0 | 12.9 |
| t₁/t₂ | - | 0.69 | 0.80 | 0.78 | 0.80 |
| Coating amount | g/m² | 4.4 | 3.9 | 3.7 | 3.9 |
| Gurley permeability | sec/100 cc | 173 | 158 | 139 | 145 |
| Puncture strength | N/µm | 0.345 | 0.357 | 0.344 | 0.358 |
| Tensile strength in MD | kgf/cm² | 1820 | 1757 | 1739 | 1745 |
| Tensile strength in TD | kgf/cm² | 1965 | 1876 | 1975 | 1913 |
| Saturated moisture content | ppm | 1120 | 1830 | 317 | 1070 |
| Heat shrinkage rate in MD | % | 0.8 | 0.2 | 9.5 | 1.5 |
| Heat shrinkage rate in TD | % | 0.5 | 0.1 | 8.7 | 1.5 |
| Adhesive strength | - | A | A | D | A |
| Resistance properties of secondary battery | - | High | Middle | High | Middle |

**[Table 3]**

| Peak position (cm⁻¹) | | 1 | 2 | 3 | 4 | 5 |
|---|---|---|---|---|---|---|
| Example 1 | Average | 2919.6 | 3280.5 | 3095.3 | 1083.8 | 1147.5 |
| | Standard deviation | 0.60 | 0.21 | 0.18 | 0.00 | 0.00 |
| Example 2 | Average | 2919.6 | 3280.5 | 3095.3 | 1083.8 | 1147.5 |
| | Standard deviation | 0.70 | 0.20 | 0.21 | 0.00 | 0.00 |
| Example 3 | Average | 2918.5 | 3282.8 | 3095.2 | 1085.8 | 1147.5 |
| | Standard deviation | 0.91 | 0.76 | 0.49 | 0.00 | 0.00 |
| Example 4 | Average | 2918.8 | 3282.4 | 3095.3 | 1084.7 | 1147.5 |
| | Standard deviation | 0.96 | 0.00 | 0.00 | 0.00 | 0.00 |
| Example 5 | Average | 2919.6 | 3280.5 | 3095. | 1083.8 | 1147.5 |
| | Standard deviation | 0.58 | 0.19 | 0.15 | 0.00 | 0.00 |
| Comparative Example 1 | Average Standard deviation | 2919.60.64 | 3280.50.20 | 3095.30.20 | 1083.80.00 | 1147.50.00 |
| Comparative Example 2 | Average | 2919.8 | 3297.8 | 3099.2 | 1076.1 | 1149.5 |
| | Standard deviation | 0.22 | 0.23 | 0.00 | 0.00 | 0.49 |
| Comparative Example 3 | Average | 2918.5 | 3282.8 | 3095.2 | 1087.0 | 1147.5 |
| | Standard deviation | 0.91 | 0.76 | 0.49 | 0.00 | 0.00 |
| Comparative Example 4 | Average | 2919.7 | 3286.4 | 3095.4 | 1082.0 | 1149.4 |
| | Standard deviation | 0.54 | 0.53 | 0.48 | 0.25 | 0.00 |

Referring to Tables 1 and 2, the separators of Examples 1 to 5 had excellent heat resistance even at a small thickness with a heat shrinkage rate of 5% or less and also had excellent adhesive strength with no adhesion in the adhesive strength test, as compared with the comparative examples. In addition, it was confirmed that the discharge resistance of the battery to which the separators were applied after 600 cycles was low.

Specifically, referring to Table 3, the separators of the examples which had the peak shown in the range of 1082.5 to 1086.5 cm⁻¹ in the FT-IR spectrum and also satisfied the saturated moisture content of 350 to 1000 ppm were all excellent in terms of heat resistance, adhesion, and battery resistance properties, unlike the separators of Comparative Examples 2 and 4 which did not have the peak and the saturated moisture content in the range described above or the separator of Comparative Example 1 which did not have the saturated moisture content in the range described above.

In particular, since Examples 1 to 4 used the polyacrylamide-based resin prepared by further including the hydroxyl group-containing (meth)acrylate-based monomer other than the (meth)acrylamide-based monomer as the binder, they were confirmed to have better heat resistance than Example 5 using the (meth)acrylamide-based monomer alone.

In addition, since Example 1 further included polyvinyl alcohol as the binder, it was confirmed to have better heat resistance than Example 2, even without pretreatment on the porous substrate.

However, since the separator of Comparative Example 1 had a t₁/t₂ value of less than 0.75, it did not satisfy the saturated moisture content range to be implemented in the present disclosure, and thus, the discharge resistance of the battery to which the separator was applied after 600 cycles was confirmed to be significantly higher than the examples.

In addition, the separator of Comparative Example 2 used the inorganic particles having a BET specific surface area of 20 m²/g, and as a result, it did not satisfy the peak in the specific range shown in the FT-IR spectrum and the saturated moisture content in the specific range which are to be implemented in the present disclosure, and thus, the discharge resistance of the battery to which the separator was applied after 600 cycles was confirmed to be significantly higher than the examples.

In addition, the separator of Comparative Example 3 used the inorganic particles having a BET specific surface area of 2.5 m²/g, and as a result, it did not satisfy the peak in the specific range shown in the FT-IR spectrum and the saturated moisture content in the specific range which are to be implemented in the present disclosure, and thus, was confirmed to have significantly reduced heat resistance and adhesive strength at a small thickness. In addition, the discharge resistance of the battery to which the separator was applied after 600 cycles was confirmed to be significantly higher than the example.

In addition, the separator of Comparative Example 4 used the inorganic particles having a BET specific surface area of 8 m²/g, and as a result, it did not satisfy the peak in the specific range shown in the FT-IR spectrum and the saturated moisture content in the specific range which are to be implemented in the present disclosure, and thus, the discharge resistance of the battery to which the separator was applied after 600 cycles was confirmed to be higher than Example.

The separator according to the present disclosure may have excellent heat resistance and adhesion even at a small thickness.

In addition, the separator according to the present disclosure may have excellent mechanical strength and permeability even at a small thickness.

In addition, since the present disclosure includes the separator according to an example embodiment, an electrochemical device having excellent resistance properties and thermal safety may be provided.

The above description is only an example to which the principle of the present disclosure is applied, and other constitutions may be further included without departing from the scope of the present disclosure.

## Claims

1. A separator comprising:
a porous substrate; and
an inorganic particle layer which is formed on at least one surface of the porous substrate and comprises a binder and inorganic particles,
wherein the separator has a peak shown in a range of 1082.5 to 1086.5 cm⁻¹ in a spectrum by Fourier-transform infrared spectroscopy (FT-IR), and has a saturated moisture content measured by a Karl Fischer method of 350 to 1000 ppm.

2. The separator of claim 1, wherein the separator has a saturated moisture content of 450 to 1000 ppm.

3. The separator of claim 1 or 2, wherein the porous substrate has an average thickness of 5 to 15 um,
and/or a ratio t₁/t₂ of the average thickness of the porous substrate (t₁) to an average thickness of the separator (t₂) is 0.7 or more.

4. The separator of any one of claims 1 to 3, wherein a total thickness of the inorganic particle layer formed on the porous substrate is 3.2 µm or less.

5. The separator of any one of claims 1 to 4, wherein the binder comprises a polyacrylamide-based resin,
preferably wherein the polyacrylamide-based resin is a copolymer comprising a unit derived from a (meth)acrylamide-based monomer and a unit derived from a comonomer,
optionally wherein the unit derived from the comonomer is a (meth)acryl-based monomer containing a hydroxyl group.

6. The separator of claim 5, wherein the polyacrylamide-based resin has a weight average molecular weight of 100,000 to 2,000,000 g/mol.

7. The separator of claim 5or 6, wherein the binder further comprises any one or two or more additional binders selected from the group consisting of polyvinyl alcohol, polyvinylidene fluoride, carboxymethyl cellulose, styrene butadiene rubber, polyacrylic acid, polyethylene glycol, polyacrylonitrile, polyvinylpyrrolidone, and copolymers thereof, optionally wherein a content of the additional binder is 0.1 to 30 wt% of the total content of the binder.

8. The separator of any one of claims 1 to 7, wherein the inorganic particles have a BET specific surface area of 3 to 7 m²/g,
and/or wherein the inorganic particles have an average particle diameter (D50) of 0.5 to 1.5 um.

9. The separator of any one of claims 1 to 8, wherein the inorganic particles comprise any one or two or more selected from the group consisting of metal hydroxides, metal oxides, metal nitrides, and metal carbides.

10. The separator of any one of claims 1 to 9, wherein heat shrinkage rates in the machine direction and/or the transverse direction which are measured after leaving the separator at 130°C for 60 minutes is 5% or less.

11. The separator of any one of claims 1 to10, wherein the inorganic particle layer has a weight ratio between the inorganic particles and the binder of 50:50 to 99.9:0.1.

12. The separator of any one of claims 1 to 11, wherein the inorganic particle layer is formed to be 0.5 to 10 g/m².

13. An electrochemical device comprising the separator of any one of claims 1 to 12.

14. A method of determining stability of a battery over time, and/or of testing decrease of battery capacity or decomposition of electrolyte, by measuring whether the separator has a peak shown in a range of 1082.5 to 1086.5 cm⁻¹ in a spectrum by Fourier-transform infrared spectroscopy (FT-IR), and whether the separator has a saturated moisture content measured by a Karl Fischer method of 350 to 1000 ppm.

15. A battery package comprising one or more battery cells, and a packaging material made of polyethylene, wherein each battery cell comprises a separator and the separator has a peak shown in a range of 1082.5 to 1086.5 cm⁻¹ in a spectrum by Fourier-transform infrared spectroscopy (FT-IR), and has a saturated moisture content measured by a Karl Fischer method of 350 to 1000 ppm,
optionally wherein the packaging material is free of aluminum.
